# EUROPEAN PATENT SPECIFICATION

(11) **EP 4 310 646 B1**
(45) Date of publication and mention of the grant of the patent: **10.06.2026**
(21) Application number: 22794685.2
(22) Date of filing: 19.04.2022
(51) Int. Cl.: G06F 3/0481, G06F 3/0484, G06F 3/0488

(54) **DEVICE DISCOVERY METHOD AND SYSTEM AND ELECTRONIC DEVICE**
VORRICHTUNGSERKENNUNGSVERFAHREN UND -SYSTEM SOWIE ELEKTRONISCHE VORRICHTUNG
PROCÉDÉ ET SYSTÈME DE DÉCOUVERTE DE DISPOSITIF ET DISPOSITIF ÉLECTRONIQUE

(30) Priority: 26.04.2021 CN 202110455282
(43) Date of publication of application: 24.01.2024
(73) Proprietor: Huawei Technologies Co., Ltd., Longgang Shenzhen, Guangdong 518129 (CN)
(72) Inventor: LIU, Yuhui, Shenzhen, Guangdong 518129 (CN)
(74) Representative: Goddar, Heinz J.
(86) International application number: PCT/CN2022/087722
(87) International publication number: WO 2022/228214

(56) References cited:
- WO-A1-2016/040721
- CN-A- 103 365 572
- CN-A- 104 581 402
- CN-A- 110 958 475
- CN-A- 111 092 990
- CN-A- 111 684 778
- CN-A- 112 306 325
- US-A1- 2007 250 458

## Description

This application claims priority to Chinese Patent Application No. 202110455282.4, filed with the China National Intellectual Property Administration on April 26, 2021 and entitled "DEVICE DISCOVERY METHOD, SYSTEM, AND ELECTRONIC DEVICE".

### TECHNICAL FIELD

This application relates to the field of electronic technologies, and in particular, to a device discovery method.

### BACKGROUND

An electronic device such as a mobile phone may access data on another electronic device that is in a same network as the electronic device, for example, browse a picture on the another electronic device.

WO 2016/040721 A1 discloses: Systems and methods cross device application discovery and/or control. Cross device application discovery and/or control can provide for simple detection and activation of applications on remote devices. Cross device application discovery and/or control can provide for the control of remote applications in a master and slave configuration. Responsive to an activation message, an application can execute a task in an application, the task being displayed on a target device. Responsive to an activation message, an application can execute a task in an application on a target device, a task context data for the task being streamed to the source device for presentation on a display. Cross device application discovery and/or control can be enabled on a single operating system, or across a plurality of operating systems.

### SUMMARY

This application provides a device discovery method. By implementing the method, an electronic device such as a mobile phone may filter a discovered device based on features of different distributed applications, so that a device obtained after the filtering meets a requirement of an application.

The invention is defined by the independent claims. Dependent claims define preferred embodiments.

According to a first aspect, an embodiment of this application provides a device discovery method. The method includes: A first device displays a first interface provided by a first application. At least one control is displayed in the first interface. The first device detects M second devices. The second device includes a device that is located in a same network as the first device, and/or a device that logs in to a same user account as the first device. The first device displays identifiers of N second devices in response to an operation performed on one of the at least one control. The N second devices include a second device, in the M second devices, on which a second application is installed. The second application and the first application provide a same resource, and the first device and the N second devices meet one or more filtering policies set by each other. The first device detects a first operation performed on one of the identifiers of the N second devices, and invokes a resource of a second device corresponding to the identifier on which the first operation is performed.

By implementing the method provided in the first aspect, the first device may filter a discovered device based on features of different distributed applications, and then display an icon of a second device that meets a filtering requirement. In this way, a user may select any displayed second device to invoke a resource provided by the second device.

It should be understood that an application of preset version is an application that includes a specific version and a follow-up version, and an operating system of preset version is an operating system that includes a specific version and a follow-up version.

By implementing the method provided in the foregoing embodiment, the first device may filter a discovered device based on features of different distributed applications.

With reference to some embodiments of the first aspect, in some embodiments, before the first device detects the M second devices, the method further includes: The first device detects a second operation.

By implementing the method provided in the foregoing embodiment, the user may enable a distributed function when the distributed function needs to be used, and disable the function when the function does not need to be used. This helps reduce energy consumption of the first device.

With reference to some embodiments of the first aspect, in some embodiments, that the first device displays the identifiers of the N second devices specifically includes that the first device displays a second interface provided by the first application. The identifiers of the N second devices are displayed in the second interface.

By implementing the method provided in the foregoing embodiment, the first device may display a second device that meets a requirement of the first application. Further, the user may know another electronic device that can be invoked by the application. Then, the user may invoke a resource provided by any displayed second device.

With reference to some embodiments of the first aspect, in some embodiments, the resource includes at least one of an image, a service, a capability, and hardware.

By implementing the method provided in the foregoing embodiment, the first device may invoke an image, a service, a capability, and hardware that are provided by the second device, to meet more requirements of the user.

With reference to some embodiments of the first aspect, in some embodiments, the resource includes an image. Invoking the resource of the second device corresponding to the identifier on which the first operation is performed specifically includes: displaying a third interface provided by the first application, and displaying, in the third interface, an image of the second device corresponding to the identifier of the first operation is performed.

By implementing the method provided in the foregoing embodiment, the first device may invoke a gallery provided by the second device. In this way, the user may access an image such as a picture or a video of the second device on the first device.

With reference to some embodiments of the first aspect, in some embodiments, the resource is a camera. Invoking the resource of the second device corresponding to the identifier on which the first operation is performed specifically includes: displaying a fourth interface provided by the first application, and displaying, in the fourth interface, an image that is captured by a camera of the second device corresponding to the identifier on which the first operation is performed.

By implementing the method provided in the foregoing embodiment, the first device may invoke the camera provided by the second device. In this way, the user may perform photographing on the first device by using the camera of the second device, to obtain richer photographing experience of the user.

With reference to some embodiments of the first aspect, in some embodiments, the method further includes: The first device does not display an identifier of a second device on which the second application is not installed.

By implementing the method provided in the foregoing embodiment, the second device displayed by the first device is a second device that can provide a resource for the first device. When selecting any second device, the user may invoke a resource provided by the second device, to avoid a case in which a second device that does not meet a requirement of the application is displayed.

According to a second aspect, an embodiment of this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method described in any one of the first aspect and the possible implementations of the first aspect.

According to a third aspect, an embodiment of this application provides a computer program product including instructions. When the computer program product runs on an electronic device, the electronic device is enabled to perform the method described in any one of the first aspect and the possible implementations of the first aspect.

According to a fourth aspect, an embodiment of this application provides a computer-readable storage medium, including instructions. When the instructions are run on an electronic device, the electronic device is enabled to perform the method described in any one of the first aspect and the possible implementations of the first aspect.

It may be understood that the first device provided in the second aspect, the computer program product provided in the third aspect, and the computer storage medium provided in the fourth aspect are all configured to perform the method provided in embodiments of this application. Therefore, for beneficial effects that can be achieved by the first device, the computer program product, and the computer storage medium, refer to beneficial effects in the corresponding method. Details are not described herein again.

### BRIEF DESCRIPTION OF DRAWINGS

FIG. 1 is a diagram of a network architecture according to an embodiment of this application;
FIG. 2 is a diagram of a software architecture of a distributed function according to an embodiment of this application;
FIG. 3 is a diagram of a software architecture of a distributed function including a filtering policy according to an embodiment of this application;
FIG. 4 is a schematic diagram of a data structure of a filtering policy according to an embodiment of this application;
FIG. 5A is a schematic diagram of filtering processing according to an embodiment of this application;
FIG. 5B is another schematic diagram of filtering processing according to an embodiment of this application;
FIG. 6A to FIG. 6H, FIG. 7A to FIG. 7E, and FIG. 8A to FIG. 8C show a group of user interfaces according to an embodiment of this application; and
FIG. 9 is a diagram of a hardware structure of an electronic device according to an embodiment of this application.

### DESCRIPTION OF EMBODIMENTS

Terms used in the following embodiments of this application are merely intended to describe specific embodiments, but are not intended to limit this application.

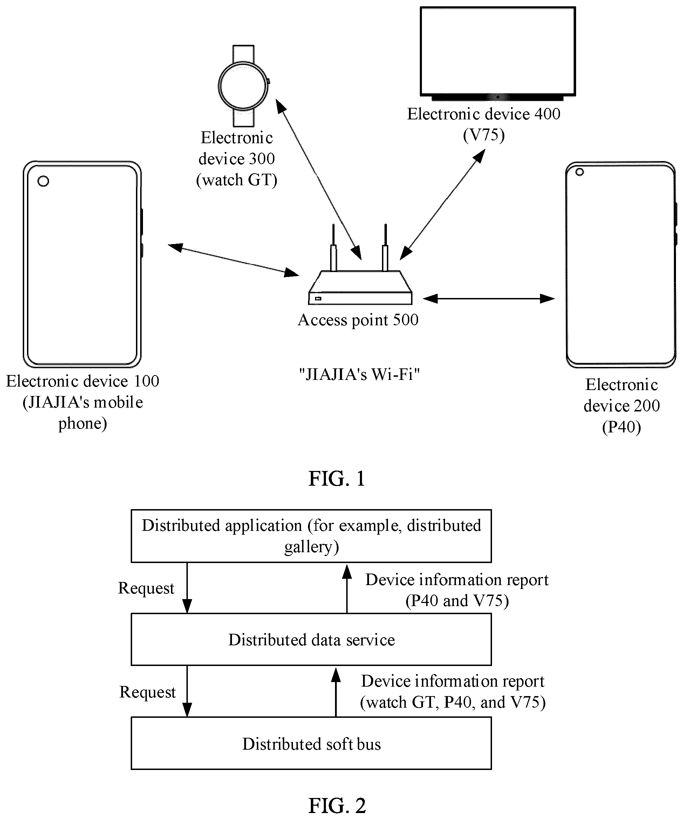

First, with reference to FIG. 1, a network architecture in an embodiment of this application is described as an example.

As shown in FIG. 1, an electronic device 100 ("JIAJIA's mobile phone") and other devices such as an electronic device 200 ("P40"), an electronic device 300 (watch GT), and an electronic device 400 ("V75") may access a same access point 500 and be located in a same network. For example, the network is "JIAJIA's Wi-Fi".

The electronic device in the network shown in FIG. 1 may be a mobile phone (the electronic device 100 and the electronic device 200), a smart watch (the electronic device 300), or a web television (the electronic device 400). The electronic device is not limited thereto. The electronic device may further include a tablet computer, a personal computer (personal computer, PC), a personal digital assistant (personal digital assistant, PDA), an augmented reality (augmented reality, AR) device, a virtual reality (virtual reality, VR) device, and the like. Alternatively, the electronic device may be another portable electronic device such as a laptop (Laptop). It should be further understood that, in some other embodiments, the electronic device may not be the portable electronic device but a desktop computer, or the like. An example embodiment of the electronic device includes but is not limited to a portable electronic device that carries iOS^{®}, Android^{®}, Harmony^{®}, Windows^{®}, Linux, or another operating system.

The electronic device 100 may request to access data on another electronic device (for example, image data such as a picture or a video on the electronic device 200). This is equivalent to that data that can be accessed by the electronic device 100 is stored in the another electronic device in the same network in a distributed manner. This is not limited to the electronic device 100. The electronic device 200 ("P40"), the electronic device 300 ("watch GT"), and the electronic device 400 ("V75") in the network shown in FIG. 1 may also access the data on the another electronic device in the network like the electronic device 100 ("JIAJIA's mobile phone").

The electronic device 100 may provide a function of "distributed data access", so that a user of the electronic device 100 can access the data or a service that is stored in or integrated into the another electronic device in a distributed manner, for example, a picture on the electronic device 200 or the electronic device 400. The "distributed data access" is merely a name, and does not constitute a limitation on this embodiment of this application. When to-be-accessed data is a picture or a video in a gallery on the another electronic device, the "distributed data access" may be specifically named "distributed gallery access".

For a prerequisite for the "distributed data access" function on the electronic device 100, the electronic device and an accessed electronic device are in a same network, and a trusted relationship may be further required between the electronic device 100 and the accessed electronic device. The trusted relationship may include but is not limited to a trusted relationship in which the electronic device 100 and the accessed electronic device such as the electronic device 200, the electronic device 300, or the electronic device 400 log in to a same account, or in which a logged-in account of the electronic device 100 and a logged-in account of the accessed electronic device are family accounts or working group accounts with each other, or the like.

When implementing specific distributed data access, for example, the distributed gallery access, the electronic device 100 may present, to the user, another device discovered by the electronic device 100 as a device option (for example, "P40", "watch GT", and "V75") for the data access. In this way, provided that the user selects a device option (for example, "P40"), the user can access a gallery on a device indicated by the device option. However, device filtering is not performed for the presentation. As a result, another device that does not have a gallery capability may be presented to the user as a device option. Therefore, the user selects this nearby device by mistake, and cannot successfully access a gallery on the device, thereby causing poor user experience. For example, a lightweight device such as a band or a watch like "watch GT" usually does not have an image (such as a picture or a video) storage capability. Therefore, the lightweight device is not suitable for being used as an object for the distributed gallery access.

For this problem, this embodiment of this application provides a device discovery method. Based on a service scenario related to the distributed data access, filtering may be performed on the another device discovered by the electronic device 100, to select an electronic device that meets the service scenario. Then, the electronic device is presented to the user as a device option. For example, a service scenario related to the "distributed gallery access" is a gallery browsing scenario. Based on the scenario, another electronic device that has a gallery capability may be selected. An application such as the gallery is usually installed on the selected electronic device that has the gallery capability. Therefore, the electronic device can provide a gallery access function for the user of the electronic device 100.

With reference to FIG. 2, the following describes a software structure of the "distributed data access" provided in this embodiment of this application.

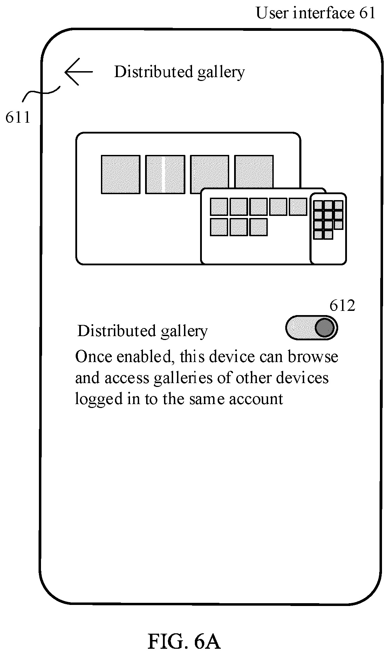

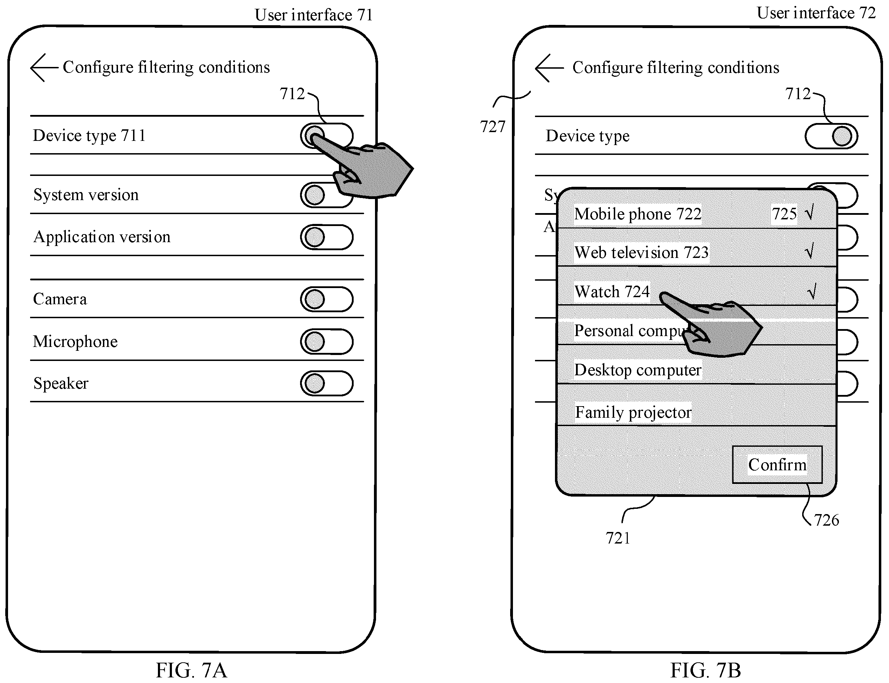

As shown in FIG. 2, a top layer of the "distributed data access" is a distributed application. The distributed application may provide a series of user interfaces. Therefore, a user can browse or use, through the user interfaces, data or a service that is stored in or integrated into another electronic device in a distributed manner. For example, the distributed application is a distributed gallery. For the user interfaces provided by the distributed gallery, refer to FIG. 6A to FIG. 6H and FIG. 7A to FIG. 7E. The user interfaces are described in detail in subsequent embodiments. Details are not described herein.

As shown in FIG. 2, the "distributed data access" may further include a distributed data service and a distributed soft bus. The distributed data service and the distributed soft bus are background services of the distributed application. The distributed data service provides a data (data from an accessed device, for example, a picture on the accessed device) read interface, a filtering policy synchronization interface, a device online/offline notification interface, and the like for an upper-layer distributed application.

The data read interface may be used by the electronic device 100 to read data from an accessed device side, for example, read a picture on the accessed device. The filtering policy synchronization interface may be used by the electronic device 100 to obtain a filtering policy of another electronic device. The device online/offline notification interface may be used by the electronic device 100 to learn of a device that enters a network (in other words, goes online), and be used by the electronic device 100 to learn of a device that leaves the network (in other words, goes offline). The network herein is a network in which the electronic device 100 is located. When the another electronic device enters the network, the electronic device 100 may receive an online notification of the electronic device. Similarly, when the another electronic device leaves the network, the electronic device 100 may receive an offline notification of the electronic device.

Herein, the filtering policy may be used to record one or more filtering conditions set by the electronic device 100. When performing a filtering operation, the electronic device may filter the another electronic device based on the one or more filtering conditions in the filtering policy. For example, in distributed gallery access, a filtering policy customized by the electronic device 100 ("JIAJIA's mobile phone") for the distributed gallery may be retaining a device in a device type that has a gallery capability, for example, a mobile phone or a web television, and ignoring a device that does not have the gallery capability or has a relatively weak gallery capability, for example, a watch. The filtering policy may be expressed as "[1 (1 3)]". Herein, "1" may represent an electronic device in a mobile phone type, and "3" may represent an electronic device in a web television type. Herein, (1 3) in the parentheses may represent types of electronic devices that are retained when the "JIAJIA's mobile phone" performs filtering. An electronic device between the parenthesis and the bracket may represent a device type of the "JIAJIA's mobile phone".

The distributed soft bus provides a device discovery capability for the distributed data service. Device discovery may include the following two aspects: device online discovery and device offline discovery. That a device goes online may be understood as that the another electronic device enters the network in which the electronic device 100 is located. That a device goes offline may be understood as that the another electronic device that is in the same network as the electronic device 100 leaves the network.

Further, that a device goes online may be more strictly defined. For example, an electronic device can be considered to be online only when the electronic device enters the network in which the electronic device 100 is located and the electronic device is in an active (active) state such as a screen-on state.

The network in which the electronic device 100 is located may be a network formed through a short-range communication connection such as Wi-Fi or Bluetooth, or may be a network formed through a long-range communication connection such as cellular mobile communication, or may be a network formed through another point-to-point communication connection.

Herein, when there are a plurality of communication connections between an electronic device and the electronic device 100, for example, there are both a Wi-Fi connection and a Bluetooth connection between "P40" and the "JIAJIA's mobile phone ", for the "JIAJIA's mobile phone", when one communication connection between "P40" and the "JIAJIA's mobile phone" is broken, "P40" cannot be considered to be offline. "P40" can be considered to be offline only when all communication connections are broken.

In addition to the device discovery capability, the distributed soft bus may further provide a device connection capability, a data transmission capability, and the like for the distributed data service. The device connection capability may be used by the electronic device 100 to establish a communication connection to another discovered electronic device. The data transmission capability may be used by the electronic device to exchange data with another connected electronic device.

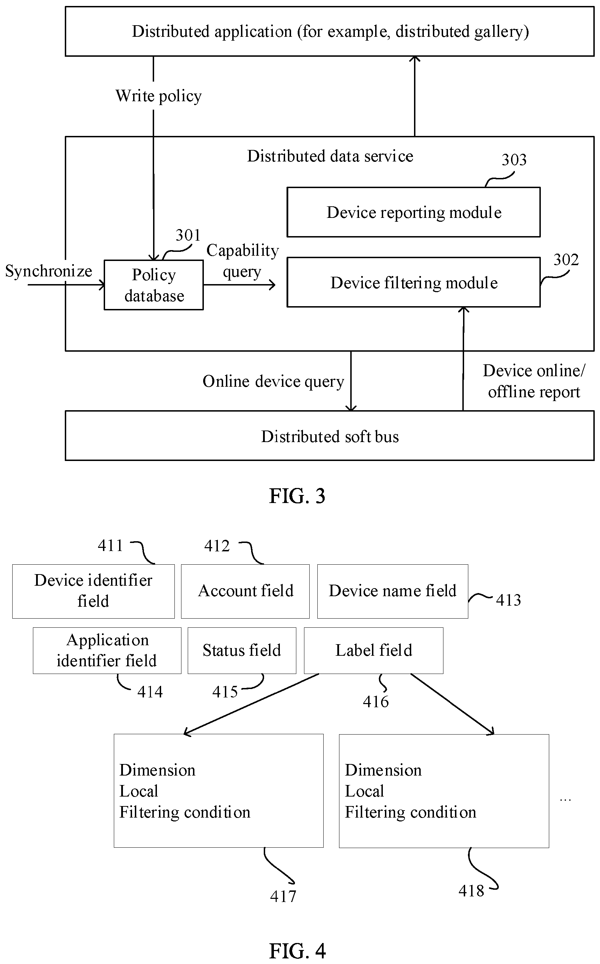

As shown in FIG. 3, the distributed data service shown in FIG. 2 may further include a policy database 301, a device filtering module 302, and a device reporting module 303. The policy database 301 may be used to store a filtering policy. The filtering policy includes a filtering policy of the electronic device 100, and may also include a filtering policy that is of another electronic device and that is synchronized by the electronic device 100 from the another electronic device. In this way, when the filtering policy of the another electronic device needs to be used subsequently, the electronic device 100 may directly obtain the filtering policy of the another electronic device from local storage. Therefore, the electronic device 100 does not need to send, each time to the another electronic device, a request for obtaining the filtering policy of the another electronic device.

Certainly, the policy database 301 is not limited to a distributed database that has a synchronization capability. To be specific, the electronic device 100 may also send the request to the another electronic device when the electronic device 100 needs to obtain the filtering policy of the another electronic device. A specific implementation of the policy database 301 is not limited in this application.

The device filtering module 302 may filter, according to the filtering policy in the policy database 301, another electronic device found by the distributed soft bus, to select an electronic device that meets the filtering policy. For the electronic device that meets the filtering policy, the device filtering module 302 may send an online notification (or an offline notification) of the electronic device to the device reporting module 303. Further, the device reporting module 303 may send the online notification (or the offline notification) to a distributed application. After receiving the online notification (or the offline notification), the distributed application may display an identifier of the electronic device corresponding to the online notification (or delete an identifier of the electronic device corresponding to the offline notification).

As shown in FIG. 4, the filtering policy includes a device identifier field 411, an account field 412, a device name field 413, an application identifier field 414, a status field 415, and a label field 416. The label field 416 may include one or more labels. One label corresponds to one filtering condition.

The device identifier field 411 may be used to record a device identifier of an electronic device to which the policy belongs. The device identifier may be used to uniquely identify one electronic device. The device identifier is, for example, a physical address, or an international mobile equipment identity (international mobile equipment identity, IMEI) of the electronic device. This is not limited in this embodiment of this application.

The account field 412 may be used to record a user account used by the electronic device to which the policy belongs. The account is, for example, a Huawei account that is logged in to on a Huawei mobile phone. In the distributed data service, in consideration of security, one party of a party that provides a data service and a party that obtains the data service usually require the other party to use a same account as the party or to use an account that has a trusted relationship with an account of the party. For example, in the description of FIG. 1, for a prerequisite for the "distributed application" on the electronic device 100, the same network is required, and a trusted relationship may be further required between the electronic device 100 and the another electronic device. The trusted relationship may be determined by checking whether the electronic device logs in to a same account, or logs in to an account in a trusted relationship, for example, a family account or a working group account.

The device name field 413 may be used to record a name of the electronic device that customizes the filtering policy. The name includes a mobile phone model, and/or a user-defined mobile phone name. In this embodiment of this application, the "JIAJIA's mobile phone", "P40", "watch GT", and "V75" shown in FIG. 1 may all indicate names corresponding to electronic devices.

The application identifier field 414 may be used to record a distributed application to which the filtering policy is applicable. For example, in a filtering policy customized for a distributed gallery, the electronic device 100 may record, in the application identifier field 414, the "distributed gallery" or an application number corresponding to the "distributed gallery", for example, "00100".

The status field 415 may be used to identify whether the distributed data service is enabled. The status field 415 may be data in a Boolean type. For example, when a value of the field is 1, it may indicate that the distributed data service is enabled; on the contrary, when a value of the field is 0, it may indicate that the distributed data service is disabled. In this embodiment of this application, when the distributed data service is enabled for the gallery application, that is, when the distributed gallery is enabled, the status field 415 of the filtering policy corresponding to the application may be set to 1. On the contrary, when the distributed data service is disabled, the status field 415 of the filtering policy may be set to 0. When the distributed data service is enabled, the gallery application is the distributed gallery application.

The label field 416 may include one or more labels. One label corresponds to one filtering condition. A label 417 is used as an example. One label may include a dimension field, a local field, and a filtering condition field. The dimension field may be used to indicate a considered perspective for setting the label. In addition, when the label field 416 includes a plurality of labels, dimension fields may be further used to distinguish between the labels. The local field may be used to record a capability or an attribute of the electronic device. The filtering condition may be used to record a condition that needs to be met by an electronic device that can be discovered by the distributed application. Table 1 shows an example of one label in one filtering policy customized for the distributed gallery.

**Table 1**

| Dimension | Local | Filtering condition |
|---|---|---|
| Device type | 1 | [1 3] |

As shown in Table 1, the label dimension "device type" of the label indicates that the electronic device 100 may filter, in terms of the device type, another electronic device found by a distributed soft bus. The device type includes but is not limited to a mobile phone, a mobile phone, a web television, a tablet computer, and a personal computer. The local field may indicate a specific type of electronic device to which the electronic device 100 belongs. Herein, "1" may mean that the electronic device 100 is an electronic device in the mobile phone type. The filtering condition may indicate a type of electronic device that can be retained after the electronic device 100 performs filtering. Herein, "[1 3]" recorded in the filtering condition field in Table 1 may indicate that types of electronic devices that can be retained after the electronic device 100 performs filtering are the mobile phone and the web television. In other words, an electronic device whose device type is the mobile phone or the web television is not filtered out.

In combination of the foregoing fields, Table 2 shows an example of a filtering policy customized by the electronic device 100 for the distributed gallery.

**Table 2: The filtering policy of the electronic device 100 in a distributed gallery scenario**

| | | | |
|---|---|---|---|
| Device identifier | | 1ABCD4444333100 | |
| Account | | 15566667777 | |
| Device name | | JIAJIA's mobile phone | |
| Application identifier | | 00100 | |
| State | | Ture | |
| Label | Label 1 | Label dimension | Device type |
| | | Local | 1 |
| | | Filtering condition | [1 3] |

As shown in Table 2, the device identifier "1ABCD4444333100" may indicate the electronic device 100 ("JIAJIA's mobile phone"). The account "15566667777" may indicate an account used on the electronic device 100. The application identifier "00100" may indicate that an application corresponding to the filtering policy is the distributed gallery. To be specific, when the distributed gallery searches for another electronic device, the electronic device 100 may use the filtering policy to filter the discovered electronic device. The state "Ture" indicates that the electronic device 100 has enabled a distributed function in this case. The filtering policy may further include one label. The label may be used to filter, in terms of the device type, the another electronic device found by the distributed soft bus. For a specific filtering operation, refer to the description of Table 1. Details are not described herein again.

It may be understood that FIG. 4 shows merely a possible data structure of the filtering policy, and should not constitute a limitation on this embodiment of this application.

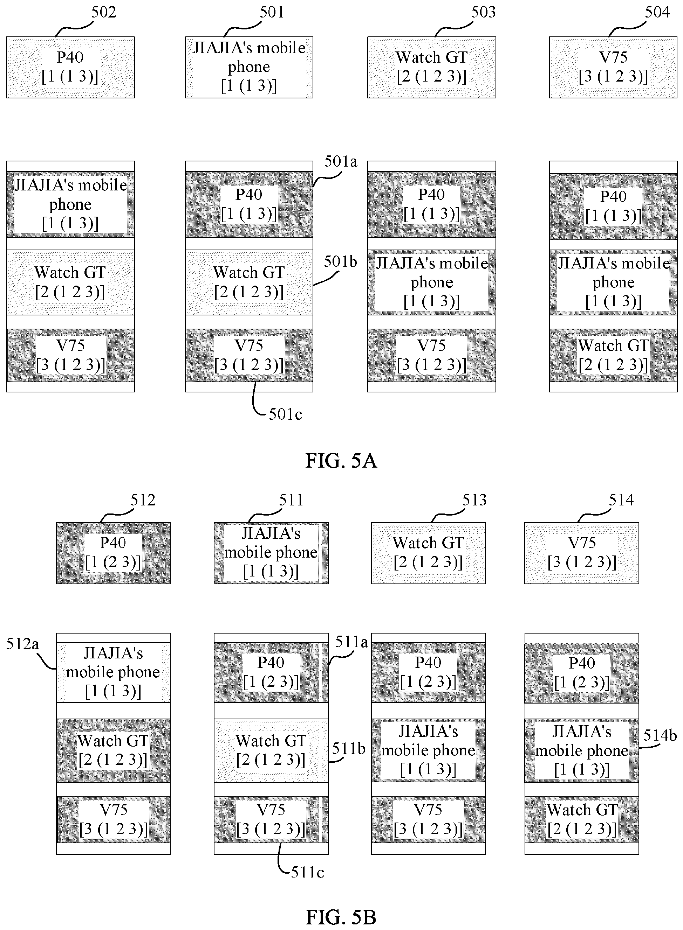

Based on the network formed by the electronic device 100 ("JIAJIA's mobile phone"), the electronic device 200 ("P40"), the electronic device 300 ("watch GT"), and the electronic device 400 ("V75") shown in FIG. 1, the following describes in detail how the electronic device 100 performs device filtering according to a filtering policy with reference to FIG. 5A and FIG. 5B.

As shown in FIG. 5A, a filtering policy of the electronic device 100 ("JIAJIA's mobile phone") is a filtering policy 501 (represented as "[1 (1 3)]"). A filtering policy of the electronic device 200 ("P40") is a filtering policy 502 (represented as "[1 (1 3)]"). A filtering policy of the electronic device 300 ("watch GT") is a filtering policy 503 (represented as "[2 (1 2 3)]"). A filtering policy of the electronic device 400 ("V75") is a filtering policy 504 (represented as "[3 (1 2 3)]").

Herein, "1" indicates a device type of a mobile phone, "2" indicates a device type of a watch, and "3" indicates a device type of a web television. Therefore, "1" may be used to identify the "JIAJIA's mobile phone" and "P40", "2" may be used to identify "watch GT", and "3" may be used to identify "V75".

According to the filtering policy 501 "[1 (1 3)]" of the "JIAJIA's mobile phone", a device type of the "JIAJIA's mobile phone" is "1" (the number 1 inside the brackets and outside the parentheses), and to-be-selected device types are "1" and "3" (the numbers 1 and 3 in the parentheses). In other words, when a filtering operation is performed, the "JIAJIA's mobile phone" may select, from a plurality of selected devices, an electronic device whose device type is the mobile phone or the web television.

Similarly, it can be learned from the filtering policy 502 "[1 (1 3)]" of "P40" that device types to be selected by "P40" are the mobile phone and the web television. Device types to be selected by "watch GT" are the mobile phone, the watch, and the web television. Device types to be selected by "V75" are the mobile phone, the watch, and the web television type.

In "JIAJIA's Wi-Fi", for example, the "JIAJIA's mobile phone" searches for and filters another electronic device in the network. First, when the "JIAJIA's mobile phone" enables a distributed data access function, in a process in which the "JIAJIA's mobile phone" can discover the another device in the network, a distributed soft bus of the "JIAJIA's mobile phone" may receive online notifications of "P40", "watch GT", and "V75". In other words, the "JIAJIA's mobile phone" may find "P40", "watch GT", and "V75".

Based on a synchronization capability of a distributed database, the "JIAJIA's mobile phone" stores the filtering policy of the "JIAJIA's mobile phone", and may also store a filtering policy of the another electronic device. Refer to a filtering policy 501a, a filtering policy 501b, and a filtering policy 501c in FIG. 5A.

Filtering policies stored in a policy database 301 of the "JIAJIA's mobile phone" include the filtering policy 501 (represented as "[1 (1 3)]"), the filtering policy 501a, the filtering policy 501b, and the filtering policy 501c. The filtering policy 501 is customized by the "JIAJIA's mobile phone". The filtering policy 501a is obtained by the "JIAJIA's mobile phone" through synchronizing the filtering policy 502 of "P40". The filtering policy 501b is obtained by the "JIAJIA's mobile phone" through synchronizing the filtering policy 503 of "watch GT". The filtering policy 501c is obtained by the "JIAJIA's mobile phone" through synchronizing the filtering policy 504 of "V75".

Similarly, "P40", "watch GT", and "V75" may also include the filtering policies of "P40", "watch GT", and "V75", and a filtering policy of another electronic device. Details are not described herein.

The "JIAJIA's mobile phone" may obtain same information as the filtering policy 502, the filtering policy 503, and the filtering policy 504 from the filtering policy 501a, the filtering policy 501b, and the filtering policy 501c that are synchronized to the "JIAJIA's mobile phone".

Then, based on device information that is of "P40", "watch GT", and "V75" and that is recorded in the filtering policy 501, the filtering policy 501a, the filtering policy 501b, and the filtering policy 501c, the "JIAJIA's mobile phone" may filter "P40", "watch GT", and "V75" that are found. Specifically, the "JIAJIA's mobile phone" may learn, from the filtering policy 501 ("[1 (1 3)]") of the "JIAJIA's mobile phone", that device types that can be discovered by the "JIAJIA's mobile phone" include the mobile phone and the web television. Then, the "JIAJIA's mobile phone" may learn from the filtering policy 501a, the filtering policy 501b, and the filtering policy 501c that a device type of "P40" is the mobile phone, a device type of "watch GT" is the watch, and a device type of "V75" is the web television. Therefore, the "JIAJIA's mobile phone" may select, from "P40", "watch GT", and "V75", "P40" and "V75" that meet the filtering policy 501.

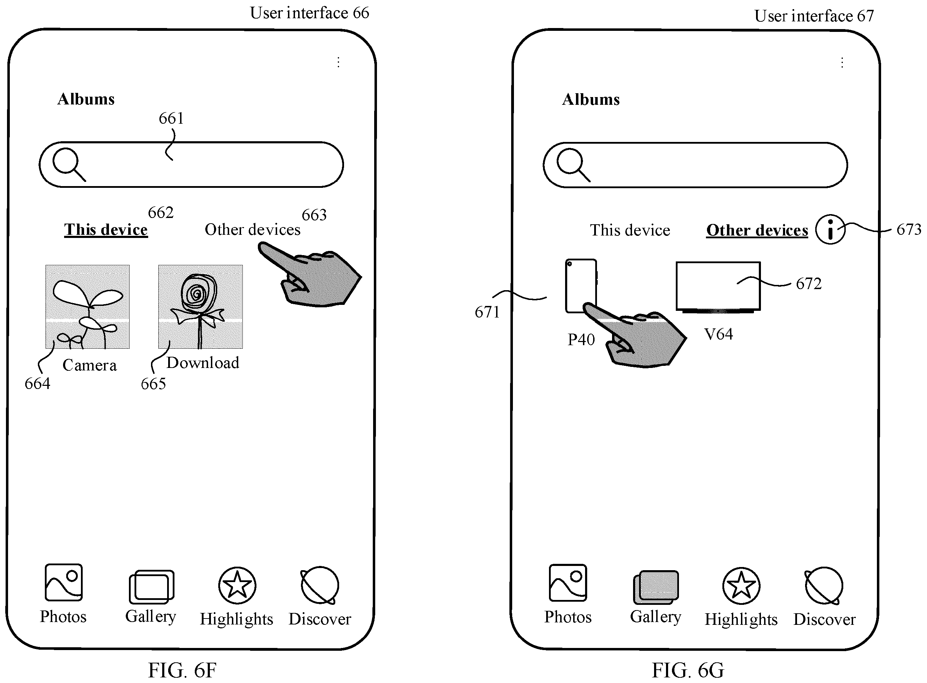

After the filtering is completed, the "JIAJIA's mobile phone" may report online notifications of the selected electronic devices to an upper-layer application. After receiving the online notifications of the electronic devices, the upper-layer application may display the electronic devices corresponding to the online notifications. For example, the "JIAJIA's mobile phone" may report, to the distributed gallery, online notifications of "P40" and "V75" that are selected. Then, the distributed gallery may display device identifiers of "P40" and "V75". For displayed user interfaces of the distributed gallery, refer to FIG. 6F to FIG. 6H. Details are described in subsequent embodiments, and are not described herein.

According to the foregoing method, an electronic device may customize a personalized filtering policy for each application according to requirements of different distributed applications. When the application searches for another electronic device, the electronic device may filter the another electronic device according to a filtering condition set in the filtering policy, and then send, to the application, an electronic device that meets the filtering condition. In this way, the following case can be avoided: The application receives a redundant and unpractical online notification (or offline notification). Therefore, the discovered electronic device is an electronic device that can actually provide a distributed data service for the device.

In some embodiments, the filtering processing may further require bidirectional verification. The bidirectional verification indicates that an electronic device that performs filtering processing and an electronic device that receives filtering processing both need to meet filtering policies set by each other. FIG. 5B is a schematic diagram of an example of filtering processing including bidirectional verification.

As shown in FIG. 5B, filtering policies stored in a policy database 301 of the "JIAJIA's mobile phone" include a filtering policy 511, a filtering policy 511a, a filtering policy 511b, and a filtering policy 511c. The filtering policy 511 is customized by the "JIAJIA's mobile phone". The filtering policy 511a is obtained by the "JIAJIA's mobile phone" through synchronizing a filtering policy 512 of "P40". The filtering policy 511b is obtained by the "JIAJIA's mobile phone" through synchronizing a filtering policy 513 of "watch GT". The filtering policy 511c is obtained by the "JIAJIA's mobile phone" through synchronizing a filtering policy 514 of "V75".

According to the filtering policy 511, the filtering policy 511a, the filtering policy 511b, and the filtering policy 511c, the "JIAJIA's mobile phone" may select, from "P40", "watch GT", and "V75", "P40" and "V75" that meet the filtering policy 511.

After "P40" and "V75" are selected, "P40" needs to verify whether device information of the "JIAJIA's mobile phone" meets the filtering policy of "P40", and "V75" needs to verify whether the device information of the "JIAJIA's mobile phone" meets the filtering policy of "V75". The foregoing steps are bidirectional verification.

When "P40" verifies whether the "JIAJIA's mobile phone" meets the filtering policy of "P40", "P40" may obtain the filtering policy 512 ("[1 (2 3)]") of "P40" and a filtering policy 512a ("[1 (1 3)]") of the "JIAJIA's mobile phone". Similarly, the filtering policy 512a is the filtering policy 511 synchronized to "P40". A device type of the "JIAJIA's mobile phone" is the mobile phone, while device types that can be discovered by "P40" are the watch and the web television. Therefore, "P40" may determine that the "JIAJIA's mobile phone" is an electronic device that does not meet the filtering policy of "P40".

In a verification process of "V75", "V75" may obtain the filtering policy 514 ("[3 (1 2 3)]") of "V75" and a filtering policy 514b ("[1 (1 3)]") of the "JIAJIA's mobile phone". The device type of the "JIAJIA's mobile phone" is the mobile phone, while device types that can be discovered by V75 are the mobile phone, the watch, and the web television. Therefore, "V75" may determine that the "JIAJIA's mobile phone" is an electronic device that meets the filtering policy of "V75".

In the foregoing bidirectional verification, the "JIAJIA's mobile phone" does not pass the bidirectional verification of "P40", but passes the bidirectional verification of "V75". Therefore, the "JIAJIA's mobile phone" may further select "V75" from "P40" and "V75". Then, the "JIAJIA's mobile phone" may send an online notification of "V75"to the distributed gallery application. Further, the distributed gallery application may display a device identifier of "V75", so that a user of the "JIAJIA's mobile phone" can learn that a device found by the "JIAJIA's mobile phone" is "V75".

The foregoing process is the bidirectional verification. After the "JIAJIA's mobile phone" determines that "P40" and "V75" are electronic devices that meet the filtering policy of the "JIAJIA's mobile phone", "P40" and "V75" further need to respectively determine whether the "JIAJIA's mobile phone" is also an electronic device that meets the filtering policies of "P40" and "V75". Then, the "JIAJIA's mobile phone" may send, to the upper-layer application, an online notification of an electronic device that passes the bidirectional verification.

Through the filtering processing implementing the bidirectional verification, an electronic device that performs filtering and an electronic device on which filtering is performed can be in fair positions. In an actual practice process, through the filtering processing that requires the bidirectional verification, the following non-equivalent services can be avoided: To be specific, Party A can display Party B and request distributed data access from Party B, but the Party B cannot display Party A and further cannot request a distributed data service from Party A.

It can be learned from the description of the label 416 in FIG. 4 that one filtering policy may include a plurality of labels, that is, a plurality of filtering conditions. The foregoing embodiments describe a case in which the filtering policy includes one label ("[1 (1 3)]"). The filtering policy is not limited to one label, and may further include more labels. For example, one filtering policy may be represented as "[1 (1 3)]" and "[a (b c)]". Herein, "[1 (1 3)]" is one label, and "[a (b c)]" is the other label. The following describes a filtering process including two or more labels in this embodiment of this application.

Filtering of a plurality of labels can be classified into two modes: a strict mode and a compatible mode.

In the strict mode, when the electronic device on which filtering is performed does not meet at least one of the plurality of policy labels, the electronic device that performs filtering may consider that the electronic device on which filtering is performed does not meet a requirement of a filtering policy. In this case, a distributed application of the electronic device that performs filtering cannot discover the electronic device on which filtering is performed. To be specific, the strict mode requires that the electronic device on which filtering is performed, to meet all the filtering conditions set by the electronic device that performs filtering.

In the compatible mode, when the electronic device on which filtering is performed meets at least one of the plurality of policy labels, the electronic device that performs filtering may consider that the electronic device on which filtering is performed meets a requirement of a filtering policy. In this case, the distributed application of the electronic device that performs filtering can discover the electronic device on which filtering is performed. To be specific, the compatible mode requires only that the electronic device on which filtering is performed meets any one of all the filtering conditions set by the electronic device that performs filtering.

For example, one filtering policy customized for the distributed gallery of the "JIAJIA's mobile phone" may include two labels. A dimension of the first label is a "device type". A dimension of the second label is an "application version". A filtering condition of the "application version" may require that an operating system used by the electronic device on which filtering is performed needs to be of a specific version or one of specific versions. The label "[a (b c)]" may indicate the label "application version". Herein, "(b c)" may indicate that application versions that can be discovered by the "JIAJIA's mobile phone" are b and c. Herein, "a" indicates that an application version of the "JIAJIA's mobile phone" is a. The "JIAJIA's mobile phone" can filter "P40" based on the filtering policy: "[1 (1 3)]" and "[a (b c)]".

In addition, the label may be alternatively a "system version". Herein, the "system version" indicates a version number of an operating system installed on an electronic device. This is because not all electronic devices can provide a distributed data access function. Generally, only when the operating system is of a specific version (including a version after the specific version), the electronic device on which the operating system is installed has the distributed data access function. Therefore, the label "[a (b c)]" may be alternatively used to indicate the label "system version". Herein, "(b c)" may indicate that system versions that can be discovered by the "JIAJIA's mobile phone" are b and c.

"(b c)" is an example. In another embodiment, the filtering policy may further record that, when a version number of an application version (or a system version) is after a preset version number, the distributed data access function is supported when an application (a system) in this version is installed.

In the strict mode, the "JIAJIA's mobile phone" may consider that "P40" meets a requirement of the filtering policy of the "JIAJIA's mobile phone" only when "P40" meets both "[1 (1 3)]" and "[a (b c)]". If there is any label that "P40" does not meet, the "JIAJIA's mobile phone" considers that "P40" does not meet the requirement of the filtering policy of the "JIAJIA's mobile phone".

For the same case, in the compatible mode, provided that "P40" meets at least one of "[1 (1 3)]" and "[a (b c)]", the "JIAJIA's mobile phone" may consider that "P40" meets the requirement of the filtering policy of the "JIAJIA's mobile phone".

The strict mode and the compatible mode may also be combined with the bidirectional verification. Details are not described in this embodiment of this application.

The following describes user interfaces for distributed gallery access provided in an embodiment of this application.
1. FIG. 6A to FIG. 6E show examples of user interfaces of enabling distributed gallery access.

FIG. 6A shows an example of a first manner in which a gallery application of an electronic device 100 enables a distributed data service.

A user interface 61 may include a return key 611 and an on/off button 612. The return key 611 may be used to close the user interface 61. The on/off button 612 may be used to enable/disable the distributed gallery access.

The electronic device 100 may detect a user operation performed on the on/off button 612. The electronic device 100 may enable the distributed gallery access in response to the operation. The operation includes tapping, sliding, flicking, or the like. This is not limited in this embodiment of this application. After enabling the distributed gallery access, the electronic device 100 may discover and use another electronic device in a same network, and monitor an online/offline state of the electronic device in the network.

After enabling the distributed gallery access, when the electronic device 100 detects a user operation performed on the on/off button 612, the electronic device 100 may disable the distributed gallery access in response to the operation. The electronic device 100 may detect a user operation performed on the return key 611. The electronic device 100 may close the user interface 61 in response to the operation.

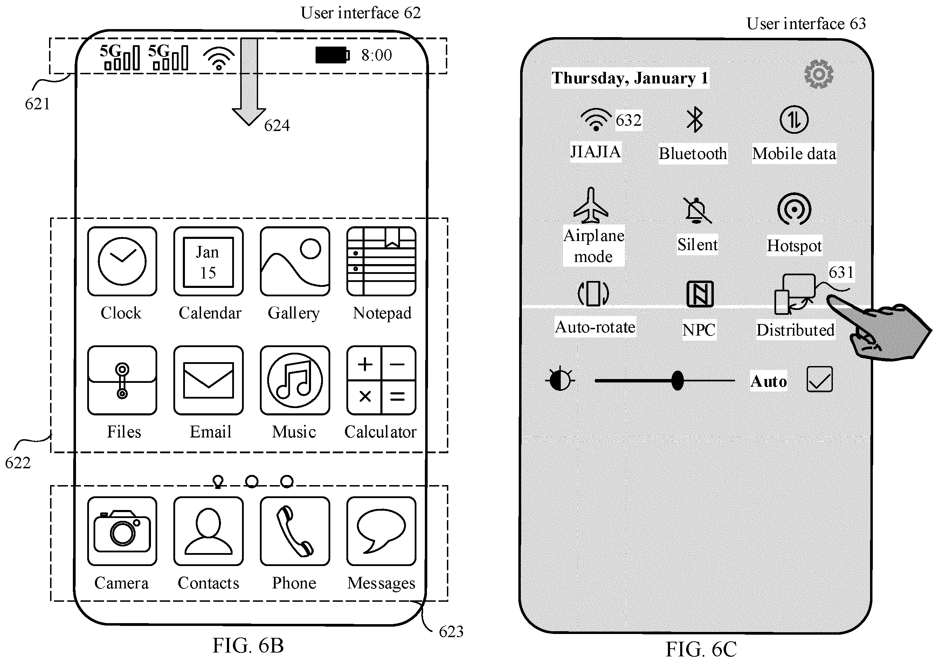

FIG. 6B and FIG. 6C show another possible enabling manner. FIG. 6B shows an example of a user interface 62 that is on an electronic device 100 and that is used to display an installed application. The user interface 62 may include a status bar 621, an application shortcut icon 622, a tray 623 including an icon of a frequently used application, and the like. The status bar 621 may include one or more signal strength indicators of a mobile communication signal (that may also be referred to as a cellular signal), an operator name (for example, "China Mobile"), one or more signal strength indicators of a Wi-Fi signal, a battery status indicator, a time indicator, and the like. The application shortcut icon 622 may include a clock application icon, a gallery application icon, and the like. The tray 623 including an icon of a frequently used application may display an icon of a frequently used application, for example, a camera application. In some embodiments, the user interface 62 shown as an example in FIG. 6B may be a home screen (Home screen).

The electronic device 100 may detect a user operation performed on the user interface 62. The electronic device 100 may display a drop-down menu bar in response to the operation, as shown in FIG. 6C. The user operation is, for example, a user operation of sliding downward from the top of the user interface 62. Refer to an icon 624.

FIG. 6C shows an example of a user interface 63 that is on the electronic device 100 and that is used to display the drop-down menu bar. The user interface 63 may include a control 631. The control 631 may be used to enable/disable a distributed data access function. The data access includes the distributed gallery access, distributed camera access, and the like. The electronic device 100 may detect a user operation performed on the control 631. The electronic device 100 may enable the distributed data access in response to the operation. The operation is tapping, or the like. After enabling the distributed data access, the electronic device 100 may discover and use another electronic device in a same network, and monitor an online/offline state of the electronic device in the network. After enabling the distributed data access function, when the electronic device 100 enters the gallery application, the electronic device may enable the distributed gallery access.

Based on different display states of the control 631, the electronic device 100 may distinguish whether the distributed function is enabled. For example, when the control 631 is in a disabled state, the electronic device 100 may set a background color of the control 631 to gray. When the control 631 is in an enabled state, the electronic device 100 may set a background color of the control 631 to white, and bold an icon line of the control 631. Based on the different states of the control 631, a user may distinguish whether the distributed function is enabled (or disabled). In another embodiment, the electronic device 100 may further distinguish between the states of the control 631 in another manner. This is not limited in this embodiment of this application.

After enabling the distributed function, when the electronic device 100 detects a user operation performed on the control 631, the electronic device 100 may disable the distributed function in response to the operation.

The user interface 63 further includes a WLAN shortcut switch 632. The WLAN shortcut switch 632 may indicate a network environment in which the electronic device is located. In this embodiment of this application, the WLAN shortcut switch 632 indicates that the electronic device 100 ("JIAJIA's mobile phone") has been connected to "JIAJIA's Wi-Fi".

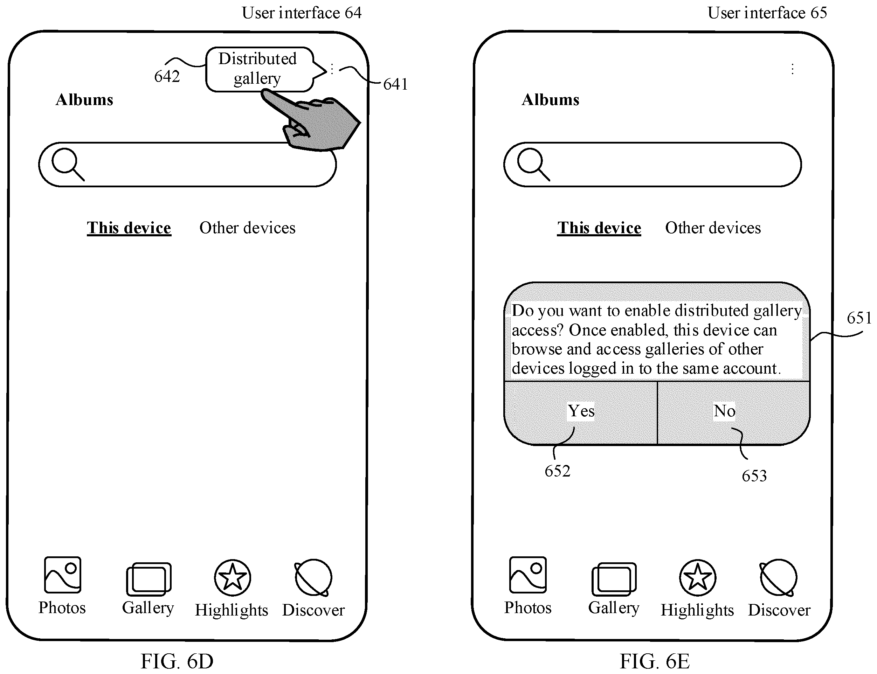

FIG. 6D and FIG. 6E show another possible enabling manner. FIG. 6D shows an example of a user interface 64 of a gallery application installed on an electronic device 100. The user interface 64 may include a control 641. The control 641 may be used to display more operations about the gallery application. The electronic device 100 may detect a user operation performed on the control 641. The electronic device 100 may display a window 642 in response to the operation. The window 642 may include a distributed gallery option. The distributed gallery option may be used to enable (or disable) a distributed gallery access function. It may be understood that the window 642 may further include another option, for example, a share option, a slide playing option, or a map displaying option. This is not limited in this embodiment of this application.

The electronic device 100 may detect a user operation performed on the distributed gallery option. In response to the operation, the electronic device 100 may display a user interface 65 shown in FIG. 6E. The user interface 65 may include a dialog box 651. The dialog box 651 may include a confirm button 652 and a cancel button 653.

The dialog box 651 may display a prompt message. The prompt message may be used to query the user whether to use the distributed gallery access. When the electronic device 100 detects a user operation performed on the confirm button 652, the electronic device 100 may enable the distributed gallery access in response to the operation. After enabling the distributed gallery access, the electronic device 100 may discover and use another electronic device in a same network, and monitor an online/offline state of the electronic device in the network.

When the electronic device 100 detects a user operation performed on the cancel button 653, the electronic device 100 may close the dialog box 651 in response to the operation.

When the distributed gallery access is already in an enabled state, and the electronic device 100 detects a user operation performed on the distributed gallery access option in the window 642, in response to the operation, the electronic device 100 may display a dialog box for disabling the distributed gallery access. Refer to the dialog box 651. Details are not described herein again.

2. FIG. 6F to FIG. 6H show examples of user interfaces of discovering the another electronic device in the network.

When the distributed gallery access is enabled, as shown in FIG. 6F to FIG. 6H, the user may access image data on the another electronic device across devices.

The electronic device 100 may detect a user operation performed on the gallery application icon (for example, the home screen of the electronic device 100 shown in FIG. 6B, where the home screen may include the gallery application icon). In response to the operation, the electronic device 100 may display a user interface of the gallery application shown in FIG. 6F.

FIG. 6F shows an example of a user interface 66 of the distributed gallery installed on the electronic device 100. The user interface 66 may include a search bar 661, a control 662, and a control 663.

The search bar 661 may be used to search for a picture. For example, the user may enter a keyword "flower" in the search bar 661. The electronic device 100 may detect a user operation performed on the search bar 661. In response to the operation, the electronic device 100 may search all pictures stored in the gallery for a picture whose picture content includes a "flower".

The control 662 may be used to display a picture stored in the electronic device 100, namely, a local picture. The control 663 may be used to display another electronic device found by the electronic device 100.

The user interface 66 may first display an icon of each album of the local picture. The local picture may include icons of one or more albums. Each icon may indicate a picture set, for example, an icon 664 or an icon 665. The icon 664 may be used to display a photo that is taken by the electronic device 100 and that is stored in the electronic device 100. The icon 665 may be used to display a picture that is downloaded from a browser by the electronic device 100 and that is stored in the electronic device 100. It may be understood that the user interface 66 may further display more icons. This is not limited in this embodiment of this application. The electronic device 100 may detect a user operation performed on an icon. In response to the operation, the electronic device 100 may display a picture in an album corresponding to the icon.

The electronic device 100 may detect a user operation performed on the control 663. In response to the operation, the electronic device 100 may display a user interface 67 shown in FIG. 6G. The user interface 67 may display the another electronic device that is in the network and that is found by the electronic device 100. The user interface 67 may include an electronic device 671 and an electronic device 672. The electronic device 671 may indicate the mobile phone "P40" in the network shown in FIG. 1. The electronic device 672 may indicate the web television "V75" in the network shown in FIG. 1.

With reference to the network architecture shown in FIG. 1, theoretically, electronic devices that can be found by the electronic device 100 ("JIAJIA's mobile phone") may include the mobile phone "P40", the watch "watch GT", and the web television "V75". However, the user interface 67 shows only the mobile phone "P40" and the web television "V75". This indicates that the watch "watch GT" is filtered out by the "JIAJIA's mobile phone". A basis of the filtering may be that types of electronic devices that can be found by the "JIAJIA's mobile phone" are the mobile phone and the web television, and the watch "watch GT" does not belong to an electronic device in the mobile phone type or the web television type.

The user interface 67 may further include a control 673. The control 673 may be used to display a user interface for adjusting a filtering policy. Details are described in subsequent embodiments.

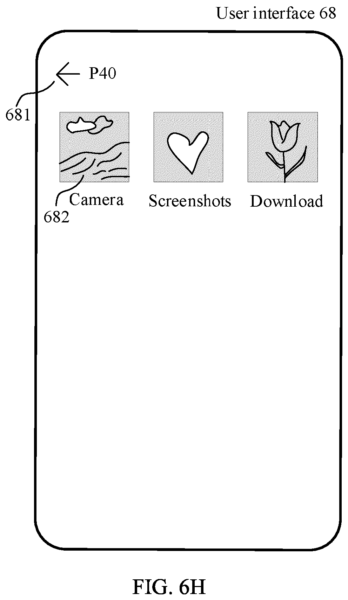

The electronic device 100 may detect a user operation performed on one of the foregoing electronic devices. The electronic device 100 may display an album of the electronic device in response to the operation. Therefore, the user can browse and access a picture on the electronic device through the electronic device 100. For example, when the electronic device 100 detects a user operation performed on the electronic device 671, in response to the operation, the electronic device 100 may display a user interface shown in FIG. 6H. The user may browse and access a picture on "P40" through the electronic device 100.

FIG. 6H shows an example of a user interface 68 in which the electronic device 100 displays a picture stored in "P40". The user interface 68 may display one or more albums of "P40", for example, a camera album indicated by an icon 682. The camera album may include all pictures taken by a camera of "P40". When the electronic device 100 detects a user operation performed on the icon 682, in response to the operation, the electronic device 100 may display all the pictures that are taken by the camera and that are stored in "P40". The user interface 68 may further include a screenshot album, a download album, and the like. Details are not described herein.

The user interface 68 may further include a return key 681. When the electronic device 100 may detect a user operation performed on the return key 681, in response to the operation, the electronic device 100 may display a user interface 67 shown in FIG. 6G. In the user interface 67, the electronic device 100 may newly detect a user operation performed on another electronic device, for example, the web television indicated by the electronic device 672. In response to the operation, the electronic device 100 may display an album stored in the web television.

FIG. 6F to FIG. 6H show a group of the user interfaces displayed when the electronic device 100 filters the electronic device in the network by using a default filtering policy after enabling the distributed gallery access. The default filtering policy may be preset by a developer in the gallery application. By using a method of the default filtering policy, the user can set the filtering policy based on a thought of the user when the filtering policy needs to be adjusted. In this way, the electronic device 100 can discover a distributed device according to a customized filtering policy, and does not bring complex user experience to the user, because the user can choose to perform modification or not to perform modification. In some embodiments, the default filtering policy may further indicate a filtering policy saved after a previous time of modification performed by the user.

3. FIG. 7A to FIG. 7E show examples of user interfaces of adjusting a filtering policy.

In addition to the preset filtering policy of the distributed application, the distributed application may further support the user in modifying the filtering policy based on a personal use habit and the like. The following describes a group of the user interfaces displayed when the electronic device 100 adjusts the filtering policy in response to user operations in FIG. 7A to FIG. 7E.

With reference to the user interface 67 shown in FIG. 6G, the user interface 67 may include the control 673. The control 673 may be used to display a user interface of adjusting the filtering policy. The electronic device 100 may detect a user operation performed on the control 673. In response to the operation, the electronic device 100 may display a user interface 71 shown in FIG. 7A.

The user interface 71 may include a plurality of filtering policy labels (filtering labels), for example, a label 711. The label 711 may be used to set a device type that can be discovered by the electronic device 100. The label 711 may include a switch 712. The switch 712 shown in the figure may indicate that the electronic device 100 has not set a filtering label of a "device type". In other words, during filtering processing, the electronic device 100 does not use a rule set by the label to filter the electronic device in the network. The electronic device 100 may detect a user operation performed on the switch 712. In response to the operation, the electronic device 100 may display a user interface 72 shown in FIG. 7B.

The switch 712 shown in the user interface 72 may indicate that the electronic device 100 has set the filtering label of the "device type". In other words, during the filtering processing, the electronic device 100 has used the rule set by the label to filter an online/offline notification of "P40".

The user interface 72 may include a window 721. The window 721 may display a plurality of device types that can be selected by the user, for example, a mobile phone 722, a web television 723, and a watch 724. The electronic device 100 may detect a user operation performed on a specific device type. The electronic device 100 may display a tick symbol behind the type in response to the operation. For example, when the electronic device 100 detects a user operation performed on the mobile phone 722, the electronic device 100 may display a tick symbol 725 after the mobile phone 722 in response to the operation. In another embodiment, the electronic device 100 may further use another method to notify the user of a selected device type, for example, changing a font color or a background color.

The ticked device type may indicate a device type that can be discovered by the electronic device 100. For example, the ticked mobile phone 722, the ticked web television 723, and the ticked watch 724 shown in the window 721 may indicate that electronic device types that can be discovered by the electronic device 100 include a mobile phone, a web television, and a watch. It can be learned from the discovery results shown in FIG. 6G that, before modification, the electronic device types that can be discovered by the electronic device 100 include a mobile phone and a web television. After modification, a watch device is added to the electronic device types that can be discovered by the electronic device 100. Therefore, in a next time of filtering processing, the electronic device 100 may retain an online/offline notification of the watch device. In other words, the electronic device in the watch type is not filtered out. Therefore, a page that displays a found electronic device may display the watch device in the network.

The electronic device 100 may detect a user operation performed on a confirm button 726. In response to the operation, the electronic device 100 may record the selected device types (the mobile phone, the web television, and the watch), and write the selected device types into a label field of the filtering policy, to modify the filtering policy. Then, the electronic device 100 may filter an online/offline notification of the another electronic device according to a modified filtering policy.

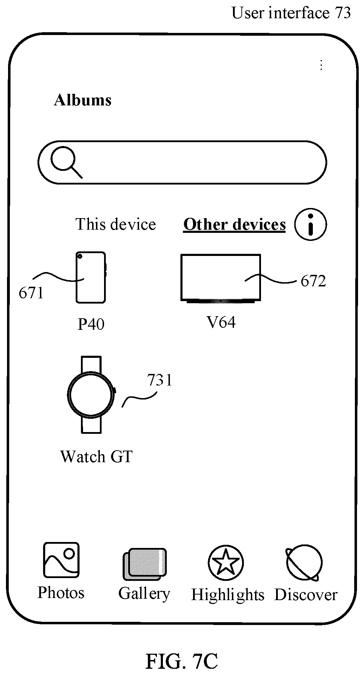

The electronic device 100 may detect a user operation performed on a return key 727. In response to the operation, the electronic device 100 may display a user interface 73 shown in FIG. 7C. The user interface 73 shows a user interface displayed when the electronic device 100 displays a found electronic device after the new filtering policy is used. In addition to the electronic device 671 and the electronic device 672 that are described in FIG. 6G, the user interface 73 may further include an electronic device 731. The electronic device 731 may be the watch "watch GT" in the network shown in FIG. 1. This indicates that, according to the modified filtering policy, the electronic device 100 retains the watch "watch GT" when performing the filtering processing, and sends an online notification of the watch "watch GT" to the distributed gallery. In this way, the distributed gallery may display "watch GT".

The electronic device 100 detects a user operation performed on the electronic device 731. In response to the operation, the electronic device 100 may display an album of the watch device corresponding to the control.

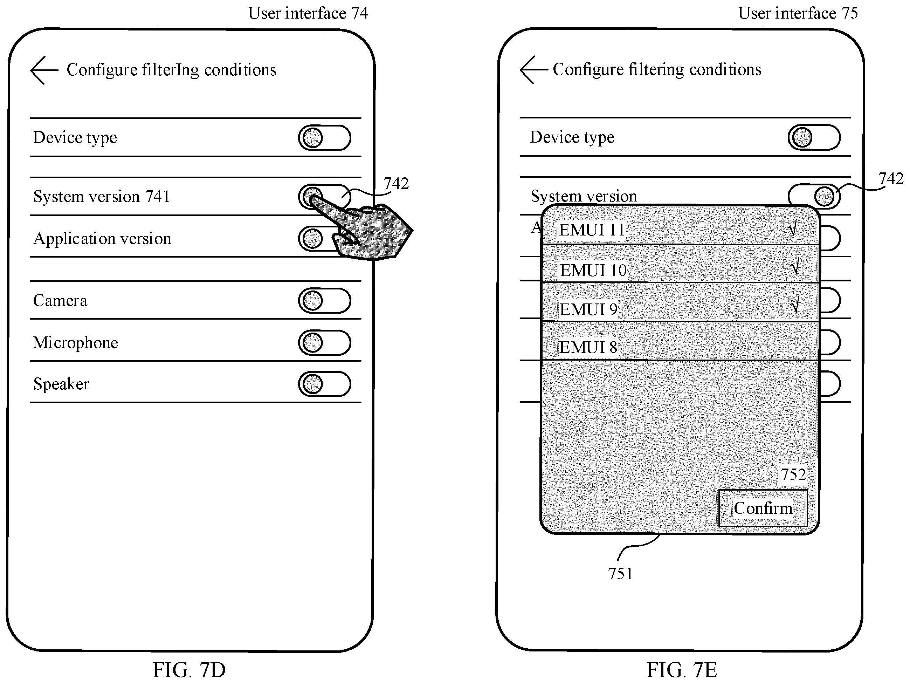

FIG. 7D and FIG. 7E show examples of user interfaces displayed when the electronic device 100 sets a filtering label of a system version. A user interface 74 may include a label 741. The label 741 may be used to set, in the filtering policy, a system version of the electronic device that can be discovered by the electronic device 100. The label 741 may include a switch 742. The electronic device 100 may detect a user operation performed on the switch 742. In response to the operation, the electronic device 100 may display a user interface 75 shown in FIG. 7E.

The user interface 75 may include a window 751. The window 751 may display a plurality of system versions that can be selected by the user, for example, EMUI 11, EMUI 10, and EMUI 9. The electronic device 100 may detect a user operation performed on a specific system version. In response to the operation, the electronic device 100 may display a tick symbol behind the type. The ticked system version may indicate that the electronic device 100 supports discovery of an electronic device on which the system version is installed. The window 751 also includes a confirm button 752. When detecting a user operation performed on the confirm button 752, in response to the operation, the electronic device 100 may record the selected system version and write the selected system version at a corresponding location of the filtering policy, to modify the filtering policy.

When a system version of the another electronic device ("P40", "watch GT", or "V75") in the network is one of the selected versions, the electronic device 100 may send an online notification of the electronic device to the distributed gallery. Therefore, the distributed gallery may display the electronic device.

The user interface of configuring the filtering policy shown in FIG. 7A may further include another filtering label, for example, configured with an "application version". By using a filtering condition of the "application version", when filtering the another electronic device, the electronic device 100 may detect whether an application is installed on the electronic device, and check whether the application meets a requirement of a preset version. When the version does not meet the requirement of the preset version, the electronic device 100 may consider that the application installed on the electronic device cannot provide an effective resource invoking service for the electronic device 100.

In another embodiment, the electronic device 100 may further require "P40" to have a multimedia component such as a camera, a microphone, and a loudspeaker, so that the electronic device 100 can use functions of the multimedia component across devices. For example, the electronic device 100 may require "P40" to have a camera, so that the electronic device 100 can request to use the camera of "P40". Then, the user may use and control the camera of"P40" through the electronic device 100, to implement the functions of the distributed camera. For an electronic device without a camera, when performing filtering processing, the electronic device 100 may filter out an online/offline notification of the electronic device, so that the upper-layer application does not receive the online/offline notification of the electronic device.

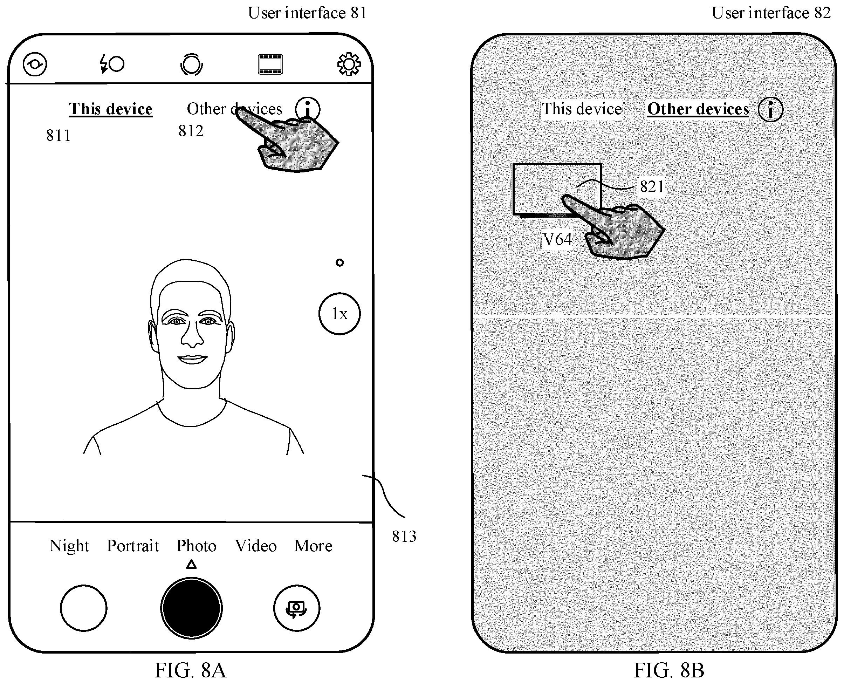

4. FIG. 8A to FIG. 8C show examples of user interfaces of discovering another electronic device after the filtering policy is adjusted.

The device discovery method provided in this embodiment of this application is not limited to be applicable only to the distributed gallery access, and may be further applicable to other distributed data/capability access, for example, distributed camera access. In this embodiment of this application, the "distributed camera access" means that the electronic device 100 may use another electronic device that is in the same network (for example, Wi-Fi) as the electronic device 100 and that has a camera capability, to perform photographing.

FIG. 8A to FIG. 8C show examples of a group of user interfaces displayed when the electronic device discovers and displays the another electronic device in the network in a distributed camera application.

After a distributed function of the camera is enabled, refer to FIG. 8A for a photographing interface of the camera application. FIG. 8A shows an example of a user interface 81 of a distributed camera of the electronic device 100. The user interface 81 may include an option 811 and an option 812. Generally, the distributed camera may first display an image captured by the camera (the camera of the electronic device 100) in a preview window such as a window 813. In this case, an image displayed in the window 813 may be an image captured by the electronic device 100.

The electronic device 100 may detect a user operation performed on the option 812. In response to the operation, the electronic device 100 may display a user interface 82 shown in FIG. 8B. The user interface 82 may include an electronic device 821. The electronic device 821 may indicate the web television "V75" in FIG. 1.

With reference to the network architecture shown in FIG. 1, another electronic device located in the same network as the electronic device 100 may include "P40", "watch GT", and "V75". When filtering processing is not performed, the user interface 82 needs to display identifiers of the three electronic devices. However, the user interface 82 displays only the identifier of the web television "V75". This indicates that the electronic device 100 performs filtering processing on a received online/offline notification. In a filtering processing process, the mobile phone "P40" and the watch "watch GT" do not meet a filtering policy of the electronic device (the electronic device 100), or do not meet the bidirectional verification described above. Therefore, the electronic device 100 may ignore online/offline notifications of the two electronic devices, and retain only an online/offline notification of "V75". Correspondingly, the electronic device 100 may display only the device identifier of "V75".

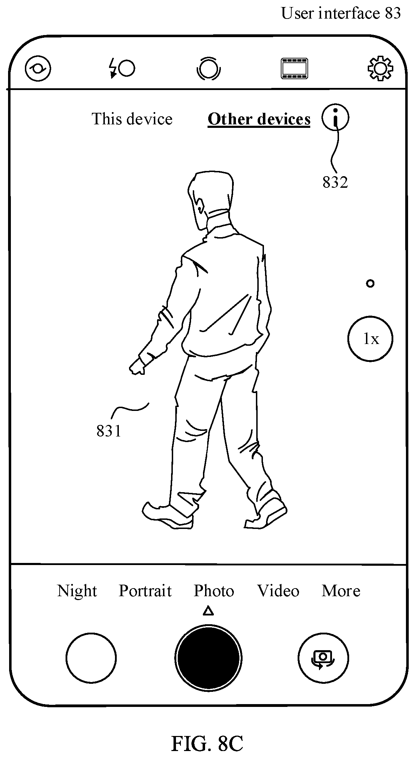

The electronic device 100 may detect a user operation performed on the electronic device 821. In response to the operation, the electronic device 100 may display a user interface 83 shown in FIG. 8C. In the user interface 83, the window 831 may display an image captured by "V75".

The user interface 83 may also include a control 832 for modifying the filtering policy. When detecting a user operation performed on the control 832, in response to the operation, the electronic device 100 may display a user interface for configuring the filtering policy. For the interface, refer to the user interfaces shown in FIG. 7A to FIG. 7B. Details are not described herein again.

As shown in the user interfaces for the distributed gallery access and the distributed camera access described above, in a same network, search results obtained when a same electronic device searches for an electronic device in a same network by using different distributed applications may be different in the network. The difference occurs because different distributed applications usually have different service scenarios. Therefore, filtering conditions set by the same electronic device for different service scenarios are usually different. In this way, the electronic device selects, from all electronic devices that can be discovered, one or more electronic devices that adapt to a current service scenario.

For example, the filtering policy set for the distributed gallery access of the electronic device 100 ("JIAJIA's mobile phone") may be "supporting discovery of electronic devices in the mobile phone type and the web television type". Based on the filtering condition, the electronic device 100 may select "P40" and "V75" from the mobile phone "P40", the watch "watch GT", and the web television "V75". A filtering policy set for the distributed camera access of the electronic device 100 may be "supporting discovery of an electronic device in the web television type". Based on the filtering condition, the electronic device 100 may select "V75" from the mobile phone "P40", the watch "watch GT", and the web television "V75". Therefore, in the distributed gallery access application, the electronic device 100 may display the identifiers of "P40" and "V75". When being switched to the "distributed camera access", the electronic device 100 may display the identifier of "V75".

The difference may be further reflected in another scenario: When two electronic devices both access a same network, the network further includes other electronic devices, and other electronic devices found by the two electronic devices are different.

For example, in "JIAJIA's Wi-Fi" shown in FIG. 1, the "JIAJIA's mobile phone" and "watch GT" are two electronic devices in the network that request a distributed data service. "JIAJIA's Wi-Fi" also includes "P40" and "V75".

When the "JIAJIA's mobile phone" opens the "distributed gallery access" shown in FIG. 6F to FIG. 6H, electronic devices that can be discovered by the "JIAJIA's mobile phone" include "P40" and "V75". In addition, an electronic device that can be discovered by the "watch GT" include "V75". If filtering possessing is not performed, theoretically, devices found by the "JIAJIA's mobile phone" need to include "watch GT", "P40", and "V75"; and devices found by "watch GT" need to include the "JIAJIA's mobile phone", "P40", and "V75". Compared with the search results shown in the foregoing embodiment, it indicates that both the "JIAJIA's mobile phone" and "watch GT" perform filtering processing, and the filtering policies of the "JIAJIA's mobile phone" and "watch GT" are different. Therefore, the search results of the "JIAJIA's mobile phone" and "watch GT" are different.

In this embodiment of this application, the "JIAJIA's mobile phone" may be referred to as a first device, and "P40", "V75", and "watch GT" may be referred to as second devices.

The distributed gallery application and the camera application in which the distributed function is enabled may be referred to as first applications. An application that provides a gallery service and a camera service and that is on the second device may be referred to as a second application. The second application and the first application may be a same application, or may be different applications.

The user interface of the distributed gallery application shown in FIG. 6F may be referred to as a first interface, and the user interface of the camera application shown in FIG. 8A may be referred to as a first interface. The user interface of the distributed gallery application shown in FIG. 6G may be referred to as a second interface, and the user interface of the camera application shown in FIG. 8A may be referred to as a second interface.

With reference to FIG. 6F, the operation performed on the control 663 may be referred to as an operation performed on one of at least one control. With reference to FIG. 6G, the operation performed on the electronic device 671 may be referred to as a first operation. With reference to FIG. 8A, the operation performed on the option 812 may be referred to as an operation performed on one of at least one control. With reference to FIG. 8B, the operation performed on the electronic device 821 may be referred to as a first operation.

An operation of enabling a distributed data access function may be referred to as a second operation, for example, the operation performed on the on/off button 612 shown in FIG. 6A, the operation performed on the control 631 shown in FIG. 6C, and the operation performed on the confirm button 652 shown in FIG. 6E.

With reference to FIG. 6H, in the distributed gallery application, the user interface that displays the gallery on the another device may be referred to as a third interface. With reference to FIG. 8C, in the camera application, the user interface that shows the image captured by the camera of the another device may be referred to as a fourth interface.

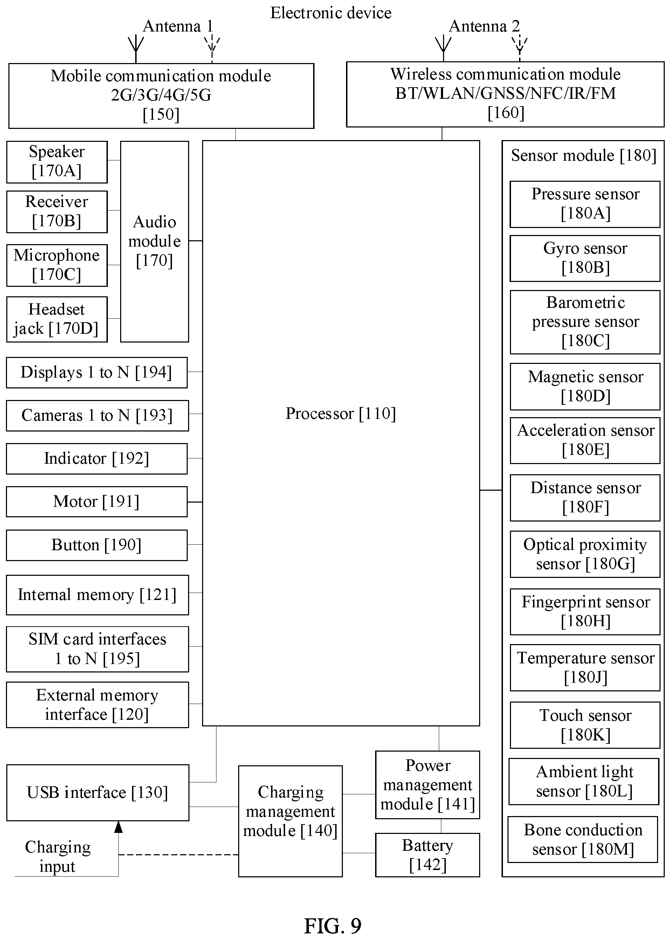

The following describes a hardware architecture of the electronic device mentioned in the foregoing embodiments. FIG. 9 is a schematic diagram of a hardware structure of an electronic device. The electronic device may indicate the mobile phone, the watch, the web television, or the like shown in FIG. 1.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated into one or more processors.

The controller may be a nerve center and a command center of the electronic device. The controller may generate an operation control signal based on an instruction operation code and a time sequence signal, to complete control of instruction fetching and instruction execution.

A memory may be further disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor may directly invoke the instruction or the data from the memory. This avoids repeated access, reduces a waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to an electronic device and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication technology (near field communication, NFC), an infrared technology (infrared, IR), and the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), 5G and a subsequent evolution standard (for example, 6G), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to a digital image signal. For example, when the electronic device selects a frequency, the digital signal processor is configured to perform Fourier transform on frequency energy.

The video codec is configured to compress or decompress a digital video. The electronic device may support one or more types of video codecs. Therefore, the electronic device may play or record videos in a plurality of encoding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, an application required for at least one function (such as a sound playing function and an image display function), and the like. The data storage area may store data (such as audio data and a phone book) created when the electronic device is used, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is further configured to convert analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device may be used to listen to music or answer a hands-free call by using the speaker 170A. The receiver 170B, also referred to as an "earpiece", is configured to convert an electrical audio signal into a sound signal. When a call is answered or voice information is received by using the electronic device, the receiver 170B may be put close to a human ear to receive a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to implement a noise reduction function in addition to capturing a sound signal. In some other embodiments, three, four, or more microphones 170C may alternatively be disposed in the electronic device, to collect a sound signal, reduce noise, identify a sound source, implement a directional recording function, and the like. The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may be alternatively disposed on a surface of the electronic device, and is located on a position different from that of the display 194.

A mobile phone device indicated by the electronic device is used as an example. In this embodiment of this application, the mobile phone may include the processor 110. The processor 110 may include the one or more processing units. The application processor (AP) can support, for the mobile phone, running of various applications installed on the mobile phone, for example, support a distributed gallery and a distributed camera. The graphics processing unit (GPU) may support display of the user interfaces shown in FIG. 6A to FIG. 6H, FIG. 7A to FIG. 7E, and FIG. 8A to FIG. 8C, and include various types of interaction controls, images, and videos in the user interfaces. The controller may generate the operation control signal based on the instruction operation code and the time sequence signal, to complete the control of instruction fetching and instruction execution.

The mobile phone may include the antenna 1, the antenna 2, the mobile communication module 150, and the wireless communication module 160. The modules may provide the wireless communication function for the mobile phone. In this embodiment of this application, based on the antenna 2 and the wireless communication module 160, the mobile phone may complete networking with an electronic device such as another mobile phone, a watch, a web television, or a tablet computer. Further, the mobile phone may query online information of the electronic device in a network. Therefore, the mobile phone may present, to the user, an electronic device that can provide a distributed data service in the network.

The mobile phone may update an online state of another electronic device in time based on an online/offline notification that is of the another electronic device in the network and that is monitored by the wireless communication network. In a process of obtaining the distributed data service, when the mobile phone serves as a party requesting the service, the mobile phone may request the distributed data service by using the wireless communication function provided by the modules. When the mobile phone serves as a party that provides a service, the mobile phone may provide the distributed data service for a requester by using the wireless communication function provided by the modules. The service includes image data such as a photo and a video, and may further include a multimedia service provided by a multimedia component such as a camera and a speaker.

The mobile phone implements the display function by using the GPU, the display 194, the application processor, and the like. An image processed by the GPU may be displayed by using the display 194. In this embodiment of this application, the user interfaces shown in FIG. 6A to FIG. 6H, FIG. 7A to FIG. 7E, and FIG. 8A to FIG. 8C may be implemented by using the display function of the display 194. In addition, image data such as a picture and a video in the mobile phone may also be displayed by using the display 194.

The internal memory 121 may be configured to store the computer-executable program code. In this embodiment of this application, executable program code of the distributed gallery may be stored in the internal memory 121. The external memory interface 120 may be configured to connect to an external memory card. An image data resource in the distributed gallery may be stored in an external memory connected to the external memory interface 120. By using the external memory interface 120, the mobile phone can access and use the image data resource stored in the external memory. When the distributed gallery obtains image data provided by the another device, the mobile phone may obtain, through the network, the image data from the external memory connected to an external memory interface 120 of the another electronic device.

The touch sensor 180K may provide an interaction function for the mobile phone. The touch sensor may transfer the detected touch operation to the application processor to determine a type of the touch event. The mobile phone may provide visual output related to the touch operation through the display 194.

For a hardware structure of the another electronic device, for example, a watch, a tablet computer, or a web television, refer to FIG. 9. This is not limited to the mobile phone. Particularly, the electronic device in a type such as the web television may have fewer hardware modules than those shown in FIG. 9. For example, the web television may not have the pressure sensor 180A, the gyro sensor 180B, the barometric pressure sensor 180C, the subscriber identity module card interface 195, and the like. In other words, on an electronic device in another form, the electronic device may include more or fewer components than those shown in the figure, or combine some components, or split some components, or have a different component arrangement. This is not described separately herein.

By implementing the method provided in this embodiment of this application, the electronic device such as the mobile phone may customize an extensible and personalized filtering policy for each application based on features of different distributed applications. After enabling a distributed data access function, the electronic device such as the mobile phone may filter another electron in the network according to the filtering policy. In a filtering process, for an electronic device that is in the network and that does not meet a service feature of a distributed application, the electronic device such as the mobile phone may filter out an online/offline notification of the electronic device, and retain only an online/offline notification of an electronic device that meets the service requirement. Further, all electronic devices corresponding to online/offline notifications received by the distributed application are electronic devices that can meet the application requirement. In this way, all electronic devices discovered by the distributed application are electronic devices that can meet a service requirement of an upper-layer application, thereby avoiding a case in which the distributed application passively receives a large quantity of redundant online/offline information.

In filtering processing that requires bidirectional verification, an electronic device on which filtering is performed may also verify whether the electronic device that performs filtering meets a filtering condition set by the electronic device. Through the filtering processing implementing the bidirectional authentication, a filtering requirement can be met, and fair positions can be ensured between two parties, thereby avoiding non-equivalent services.

The term "user interface (user interface, UI)" in the specification, claims, and accompanying drawings of this application is a medium interface for interaction and information exchange between an application or an operating system and a user, and implements conversion between an internal form of information and a form that can be accepted by the user. A user interface of an application is source code written by using a specific computer language such as Java or an extensible markup language (extensible markup language, XML). The interface source code is parsed and rendered on a terminal device, and is finally presented as content that can be identified by a user, for example, a control such as a picture, a text, or a button. The control (control), also referred to as a widget (widget), is a basic element of the user interface. Typical controls include a tool bar (tool bar), a menu bar (menu bar), a text box (text box), a button (button), a scroll bar (scroll bar), a picture, and a text. An attribute and content of a control in the interface are defined by using a tag or a node. For example, the control included in the interface is defined in the XML by using a node, for example, <Textview>, <ImgView>, or <VideoView>. One node corresponds to one control or one attribute in the interface. After being parsed and rendered, the node is presented as user-visible content. In addition, interfaces of many applications such as a hybrid application (hybrid application) usually further include a web page. The web page, also referred to as a page, may be understood as a special control embedded in an application interface. A web page is source code written by using a specific computer language such as a hypertext markup language (hypertext markup language, GTML), cascading style sheets (cascading style sheets, CSS), or JavaScript (JavaScript, JS). The web page source code may be loaded and displayed, as content that can be identified by a user, by a browser or a web page display component with a function similar to that of the browser. Specific content included in the web page is also defined by using a tag or a node of the web page source code. For example, an element and an attribute of the web page are defined in the GTML by using <p>, <img>, <video>, or <canvas>.

The user interface is usually represented in a form of a graphical user interface (graphic user interface, GUI), and is a user interface that is related to a computer operation and that is displayed in a graphic manner. The user interface may be an interface element such as an icon, a window, or a control displayed on a display of an electronic device, and the control may include a visual interface element such as an icon, a button, a menu, a tab, a text box, a dialog box, a status bar, a navigation bar, or a widget.

Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

According to the context, the term "when" used in the foregoing embodiments may be interpreted as a meaning of "if", "after", "in response to determining", or "in response to detecting". Similarly, according to the context, the phrase "when it is determined that" or "if(a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive), or the like.

A person of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The storage medium includes any medium that can store program code, such as a ROM, a random access memory RAM, a magnetic disk, or an optical disc.

## Claims

1. A device discovery method, wherein the method comprises:
displaying, by a first device (100), a first interface (66) provided by a first application, wherein at least one control is displayed in the first interface (66);
detecting, by the first device (100), M second devices (200, 300, 400), wherein the second device (200, 300, 400) comprises a device that is located in a same network as the first device (100), and/or a device that logs in to a same user account as the first device (100);
displaying, by the first device (100), identifiers of N second devices in response to an operation performed on one of the at least one control, wherein the N second devices comprise a second device (200, 300, 400), in the M second devices (200, 300, 400), on which a second application is installed, and the second application and the first application provide a same resource, and the first device (100) and the N second devices meet the one or more filtering policies set by each other; and
detecting, by the first device (100), a first operation performed on one of the identifiers of the N second devices, and invoking a resource of a second device (200, 300, 400) corresponding to the identifier on which the first operation is performed.

2. The method according to claim 1, wherein before the detecting, by the first device (100), M second devices (200, 300, 400), the method further comprises: detecting, by the first device (100), a second operation.

3. The method according to claim 1 or 2, wherein the displaying, by the first device (100), identifiers of N second devices specifically comprises: displaying, by the first device (100), a second interface (67) provided by the first application, wherein the identifiers of the N second devices are displayed in the second interface (67).

4. The method according to any one of claims 1 to 3, wherein the resource comprises at least one of an image, a service, a capability, and hardware.

5. The method according to any one of claims 1 to 4, wherein the resource comprises an image;
and
the invoking a resource of a second device (200, 300, 400) corresponding to the identifier on which the first operation is performed specifically comprises:
displaying a third interface (68) provided by the first application, and displaying, in the third interface (68), an image of the second device (200, 300, 400) corresponding to the identifier on which the first operation is performed.

6. The method according to any one of claims 1 to 4, wherein the resource is a camera (193);
and
the invoking a resource of a second device (200, 300, 400) corresponding to the identifier on which the first operation is performed specifically comprises:
displaying a fourth interface (83) provided by the first application, and displaying, in the fourth interface (83), an image that is captured by a camera (193) of the second device (200, 300, 400) corresponding to the identifier on which the first operation is performed.

7. The method according to any one of claims 1 to 6, wherein the method further comprises:
skipping displaying, by the first device (100), an identifier of a second device (200, 300, 400) on which the second application is not installed.

8. An electronic device (100, 200, 300, 400, 671, 672, 731, 821), comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 7 is performed.

9. A computer program product comprising instructions, wherein when the computer program product runs on an electronic device (100, 200, 300, 400, 671, 672, 731, 821), the electronic device (100, 200, 300, 400, 671, 672, 731, 821) is enabled to perform the method according to any one of claims 1 to 7.

10. A computer-readable storage medium, comprising instructions, wherein when the instructions are run on an electronic device (100, 200, 300, 400, 671, 672, 731, 821), the method according to any one of claims 1 to 7 is performed.

## Patentansprüche

1. Geräteerkennungsverfahren, wobei das Verfahren umfasst:
Anzeigen einer ersten Schnittstelle (66), die von einer ersten Anwendung bereitgestellt wird, durch ein erstes Gerät (100), wobei mindestens eine Steuerung in der ersten Schnittstelle (66) angezeigt wird;
Erkennen von M zweiten Geräten (200, 300, 400) durch das erste Gerät (100), wobei das zweite Gerät (200, 300, 400) ein Gerät umfasst, das sich im selben Netzwerk wie das erste Gerät (100) befindet, und/oder ein Gerät, das sich bei demselben Benutzerkonto wie das erste Gerät (100) anmeldet;
Anzeigen von Identifikatoren von N zweiten Geräten durch das erste Gerät (100) als Reaktion auf eine Operation, die an einer der mindestens einen Steuerung durchgeführt wird, wobei die N zweiten Geräte ein zweites Gerät (200, 300, 400) in den M zweiten Geräten (200, 300, 400) umfassen, auf dem eine zweite Anwendung installiert ist, und die zweite Anwendung und die erste Anwendung dieselbe Ressource bereitstellen, und das erste Gerät (100) und die N zweiten Geräte die voneinander festgelegten einen oder mehreren Filterrichtlinien erfüllen; und
Erkennen einer ersten Operation, die an einem der Identifikatoren der N zweiten Geräte durchgeführt wird, durch das erste Gerät (100) und Aufrufen einer Ressource eines zweiten Geräts (200, 300, 400), das dem Identifikator entspricht, an dem die erste Operation durchgeführt wird.

2. Verfahren nach Anspruch 1, wobei vor dem Erkennen durch das erste Gerät (100) von M zweiten Geräten (200, 300, 400) das Verfahren ferner umfasst: Erkennen einer zweiten Operation durch das erste Gerät (100).

3. Verfahren nach Anspruch 1 oder 2, wobei das Anzeigen von Identifikatoren von N zweiten Geräten durch das erste Gerät (100) insbesondere umfasst: Anzeigen einer zweiten Schnittstelle (67), die von der ersten Anwendung bereitgestellt wird, durch das erste Gerät (100), wobei die Identifikatoren der N zweiten Geräte in der zweiten Schnittstelle (67) angezeigt werden.

4. Verfahren nach einem der Ansprüche 1 bis 3, wobei die Ressource mindestens eines von einem Bild, einem Dienst, einer Fähigkeit und Hardware umfasst.

5. Verfahren nach einem der Ansprüche 1 bis 4, wobei die Ressource ein Bild umfasst; und
das Aufrufen einer Ressource eines zweiten Geräts (200, 300, 400), die dem Identifikator entspricht, auf dem die erste Operation durchgeführt wird, insbesondere umfasst:
Anzeigen einer dritten Schnittstelle (68), die von der ersten Anwendung bereitgestellt wird, und Anzeigen eines Bildes des zweiten Geräts (200, 300, 400) in der dritten Schnittstelle (68), das dem Identifikator entspricht, auf dem die erste Operation durchgeführt wird.

6. Verfahren nach einem der Ansprüche 1 bis 4, wobei die Ressource eine Kamera (193) ist;
und
das Aufrufen einer Ressource eines zweiten Geräts (200, 300, 400), die dem Identifikator entspricht, auf dem die erste Operation durchgeführt wird, insbesondere umfasst:
Anzeigen einer vierten Schnittstelle (83), die von der ersten Anwendung bereitgestellt wird, und Anzeigen eines Bildes in der vierten Schnittstelle (83), das von einer Kamera (193) des zweiten Geräts (200, 300, 400) entsprechend dem Identifikator aufgenommen wird, auf dem die erste Operation durchgeführt wird.

7. Verfahren nach einem der Ansprüche 1 bis 6, wobei das Verfahren ferner umfasst: Überspringen des Anzeigens eines Identifikators eines zweiten Geräts (200, 300, 400), auf dem die zweite Anwendung nicht installiert ist, durch das erste Gerät (100).

8. Elektronisches Gerät (100, 200, 300, 400, 671, 672, 731, 821), das einen oder mehrere Prozessoren und einen oder mehrere Speicher umfasst, wobei der eine oder mehrere Speicher mit dem einen oder mehreren Prozessoren gekoppelt sind, der eine oder mehrere Speicher dazu konfiguriert sind, den Computerprogrammcode zu speichern, der Computerprogrammcode Computeranweisungen umfasst und, wenn der eine oder mehrere Prozessoren die Computeranweisungen ausführen, das Verfahren nach einem der Ansprüche 1 bis 7 durchgeführt wird.

9. Computerprogrammprodukt, das Anweisungen umfasst, wobei, wenn das Computerprogrammprodukt auf einem elektronischen Gerät (100, 200, 300, 400, 671, 672, 731, 821) ausgeführt wird, das elektronische Gerät (100, 200, 300, 400, 671, 672, 731, 821) in die Lage versetzt wird, das Verfahren nach einem der Ansprüche 1 bis 7 durchzuführen.

10. Computerlesbares Speichermedium, das Anweisungen umfasst, wobei, wenn die Anweisungen auf einem elektronischen Gerät (100, 200, 300, 400, 671, 672, 731, 821) ablaufen, das Verfahren nach einem der Ansprüche 1 bis 7 durchgeführt wird.

## Revendications

1. Procédé de détection de dispositif, le procédé consistant à :
afficher, par un premier dispositif (100), une première interface (66) fournie par une première application, au moins une commande étant affichée dans la première interface (66) ;
détecter, par le premier dispositif (100), M deuxièmes dispositifs (200, 300, 400), où le deuxième dispositif (200, 300, 400) comprend un dispositif qui est situé dans un même réseau que le premier dispositif (100), et/ou un dispositif qui se connecte à un même compte utilisateur que le premier dispositif (100) ;
afficher, par le premier dispositif (100), les identifiants de N deuxièmes dispositifs en réponse à une opération effectuée sur l'une de l'au moins une commande, où les N deuxièmes dispositifs comprennent un deuxième dispositif (200, 300, 400), parmi les M deuxièmes dispositifs (200, 300, 400), sur lequel une deuxième application est installée, et la deuxième application et la première application fournissent une même ressource, et le premier dispositif (100) et les N deuxièmes dispositifs satisfont à une ou plusieurs politiques de filtrage définies par chacun d'entre eux ; et
détecter, par le premier dispositif (100), une première opération effectuée sur l'un des identifiants des N deuxièmes dispositifs, et invoquer une ressource d'un deuxième dispositif (200, 300, 400) correspondant à l'identifiant sur lequel la première opération est effectuée.

2. Procédé selon la revendication 1, dans lequel, avant la détection, par le premier dispositif (100), de M deuxièmes dispositifs (200, 300, 400), le procédé consiste en outre à détecter une deuxième opération par le premier dispositif (100).

3. Procédé selon la revendication 1 ou la revendication 2, dans lequel l'affichage, par le premier dispositif (100), d'identifiants de N deuxièmes dispositifs consiste spécifiquement à afficher, par le premier dispositif (100), une deuxième interface (67) fournie par la première application, où les identifiants des N deuxièmes dispositifs sont affichés dans la deuxième interface (67).

4. Procédé selon l'une quelconque des revendications 1 à 3, dans lequel la ressource comprend au moins une ressource parmi une image, un service, une capacité et du matériel.

5. Procédé selon l'une quelconque des revendications 1 à 4, dans lequel la ressource comprend une image ;
et
l'invocation d'une ressource d'un deuxième dispositif (200, 300, 400) correspondant à l'identifiant sur lequel la première opération est effectuée consiste spécifiquement :
à afficher une troisième interface (68) fournie par la première application, et à afficher, dans la troisième interface (68), une image du deuxième dispositif (200, 300, 400) correspondant à l'identifiant sur lequel la première opération est effectuée.

6. Procédé selon l'une quelconque des revendications 1 à 4, dans lequel la ressource est une caméra (193) ; et
l'invocation d'une ressource d'un deuxième dispositif (200, 300, 400) correspondant à l'identifiant sur lequel la première opération est effectuée consiste spécifiquement : à afficher une quatrième interface (83) fournie par la première application, et à afficher, dans la quatrième interface (83), une image capturée par une caméra (193) du deuxième dispositif (200, 300, 400) correspondant à l'identifiant sur lequel la première opération est effectuée.

7. Procédé selon l'une quelconque des revendications 1 à 6, dans lequel le procédé consiste en outre :
à ne pas afficher, par le premier dispositif (100), un identifiant d'un deuxième dispositif (200, 300, 400) sur lequel la deuxième application n'est pas installée.

8. Dispositif électronique (100, 200, 300, 400, 671, 672, 731, 821), comprenant un ou plusieurs processeurs et une ou plusieurs mémoires, où les une ou plusieurs mémoires sont couplées aux un ou plusieurs processeurs, les une ou plusieurs mémoires sont configurées pour stocker un code de programme informatique, le code de programme informatique comprend des instructions informatiques et, lorsque les un ou plusieurs processeurs exécutent les instructions informatiques, le procédé selon l'une quelconque des revendications 1 à 7 est mis en œuvre.

9. Produit programme d'ordinateur comprenant des instructions, dans lequel, lorsque le produit programme d'ordinateur s'exécute sur un dispositif électronique (100, 200, 300, 400, 671, 672, 731, 821), le dispositif électronique (100, 200, 300, 400, 671, 672, 731, 821) est autorisé à exécuter le procédé selon l'une quelconque des revendications 1 à 7.

10. Support de stockage lisible par ordinateur, comprenant des instructions, dans lequel, lorsque les instructions sont exécutées sur un dispositif électronique (100, 200, 300, 400, 671, 672, 731, 821), le procédé selon l'une quelconque des revendications 1 à 7 est exécuté.
